# DEMANDE DE BREVET EUROPEEN

(11) **EP 4 249 149 A1**
(43) Date de publication de la demande: **27.09.2023**
(21) Numéro de dépôt: 22164001.4
(22) Date de dépôt: 24.03.2022
(51) Int. Cl.: B22F 3/105, B22F 10/20, C22C 1/04, A44C 27/00, C22C 32/00, B33Y 10/00, B33Y 80/00, C22C 5/02, B22F 3/15, B22F 3/14

(54) **MATERIAU COMPOSITE D'OR DE COLORATION SOMBRE ET SON PROCEDE DE FABRICATION**

(71) Demandeur: Richemont International S.A., 1752 Villars-sur-Glâne (CH)
(72) Inventeur: BROIZAT, Manon, 2502 Bienne (CH); GIRAUD, Damien, 90100 Joncherey (FR); DIOLOGENT, Frédéric, 2000 Neuchâtel (CH)
(74) Mandataire: Cabinet Laurent & Charras

(57) **Abrégé**

La présente invention concerne un matériau composite d'or de couleur sombre, destiné à l'horlogerie ou la joaillerie. Ce matériau comprend :
- au moins 583 %o d'or, en poids par rapport au poids total du matériau composite ;
- 417 %_{∘} ou moins, en poids par rapport au poids total du matériau composite, de particules de pigment assombrissant,
ces particules de pigment assombrissant représentant 15 à 75 % en volume par rapport au volume total du matériau composite,
le pigment assombrissant étant du carbone amorphe, un matériau spinelle ou leurs mélanges, le matériau spinelle étant choisi dans le groupe constitué des spinelles suivantes : chromite, cochromite, cuprospinel, dellagiustaite, franklinite, gahnite, galaxite, hausmannite, et leurs mélanges.

## Description

### DOMAINE DE L'INVENTION

La présente invention concerne un matériau à base d'or et de pigment assombrissant (avantageusement des particules de carbone amorphe et/ou de spinelles).

Ce matériau peut être utilisé dans l'industrie du luxe, notamment dans les domaines de la joaillerie et de l'horlogerie.

Ce matériau présente avantageusement une couleur plus sombre que celle des matériaux ou alliages d'or classiquement utilisés dans ces domaines, en raison de la présence de quantités spécifiques de pigment assombrissant.

### ETAT ANTERIEUR DE LA TECHNIQUE

De tous temps, l'or a été mélangé à d'autres éléments dans le but de modifier ses propriétés. Ainsi, en fonction de la nature et des quantités respectives des éléments d'alliage introduits, il est possible de modifier les propriétés de l'or, notamment sa dureté ou sa couleur.

L'introduction de certains pourcentages d'argent, de cuivre ou de palladium permet ainsi classiquement d'obtenir un alliage d'or de couleur jaune, grise, rose ou rouge, que l'on nomme communément or jaune, or gris, or rose ou or rouge.

A titre d'exemple, pour de l'or 18 carats, un alliage comprenant, en poids, 75 % d'or, 12,5 % de cuivre et 12,5 % d'argent correspond à de l'or jaune. Un alliage comprenant, en poids, 75 % d'or, 20 % de cuivre et 5 % d'argent correspond à de l'or rouge. Enfin, un alliage comprenant, en poids, 75 % d'or, 3 % d'argent, 12,5 % de palladium et 9,5 % de cuivre correspond à de l'or gris.

En plus de ces trois couleurs classiques, il existe une demande pour disposer d'or présentant des nuances de couleur différentes. En particulier, un or plus sombre serait apprécié.

De même, un alliage d'or peut présenter différents aspects, par exemple un aspect mat ou un aspect poli.

Quoi qu'il en soit, un alliage d'or requiert certaines propriétés dictées par son domaine d'utilisation. Pour pouvoir être utilisé de manière satisfaisante en joaillerie et en horlogerie, un alliage d'or doit présenter une dureté suffisante pour ne pas se rayer trop facilement et une bonne stabilité de la coloration dans le temps.

Dans l'art antérieur, plusieurs matériaux ou alliages d'or assombri ont été proposés.

A titre d'exemple, le document FR 2643649 décrit un alliage d'or présentant une couche superficielle noire brillante, cet alliage étant composé essentiellement d'or et d'au moins un élément métallique de coloration choisi parmi le Cu, Fe, Co, et Ti.

Le document WO 03/66917 décrit un alliage d'or de teinte dorée noirâtre, pouvant être utilisé pour des bijoux ou des montres. Cet alliage est composé essentiellement d'or et de 0,2 à 10 % en poids de carbone. Cet alliage présente une composition homogène, sans particules, le carbone étant en solution solide dans l'or.

Le document JP 05195113 décrit un mélange de poudres de borure de lanthane, borure de néodyme, oxyde de chrome, carbure de silicium, nitrure de vanadium ou oxyde de cobalt, avec de la poudre d'or ou d'alliage d'or, afin d'obtenir après laminage à chaud des alliages d'or de différentes couleurs.

Quand bien même ces alliages et ces procédés peuvent s'avérer satisfaisants, il existe toujours un besoin d'alternatives faciles à mettre en œuvre et présentant une coloration originale par leur teinte dans la masse et/ou leur aspect (mat ou poli), tout en garantissant des propriétés adaptées à un usage en joaillerie ou en horlogerie en termes de dureté et de résistance à la décoloration.

La présente invention présente une alternative grâce à la mise au point d'un matériau d'or assombri, contenant pour cela des particules d'assombrissement.

### EXPOSE DE L'INVENTION

La présente invention concerne un matériau à base d'or présentant une coloration sombre dans la masse. Ce matériau présente des propriétés de résistance à la corrosion, à la décoloration et aux rayures suffisantes pour être utilisé dans l'industrie du luxe, notamment dans la joaillerie et l'horlogerie.

Plus précisément, la présente invention concerne un matériau composite comprenant :
- au moins 583 %o d'or, en poids par rapport au poids total du matériau composite ;
- 417 ‰ ou moins, en poids par rapport au poids total du matériau composite, de particules de pigment assombrissant représentant 15 à 75 % en volume par rapport au volume total du matériau composite,
le pigment assombrissant étant du carbone amorphe, un matériau spinelle ou leurs mélanges, le matériau spinelle étant choisi dans le groupe constitué des spinelles suivantes : chromite, cochromite, cuprospinel, dellagiustaite, franklinite, gahnite, galaxite, hausmannite, et leurs mélanges.

De manière générale, les spinelles correspondent aux familles suivantes : chromite (Fe⁺⁺Cr₂O₄), cochromite ((Co,Ni,Fe⁺⁺)(Cr,Al)₂O₄), cuprospinel (Cu⁺⁺,Mg)Fe⁺⁺⁺₂O₄), dellagiustaite (V⁺⁺Al₂O₄), franklinite ((Zn,Mn⁺⁺,Fe⁺⁺)(Fe⁺⁺⁺,Mn⁺⁺⁺)₂O₄), gahnite (ZnAl₂O₄), galaxite ((Mn⁺⁺,Fe⁺⁺,Mg)(Al,Fe⁺⁺⁺)₂O₄) et hausmannite (Mn⁺⁺Mn⁺⁺⁺₂O₄).

Le cas échéant, les formules chimiques des spinelles indiquent les proportions atomiques des éléments chimiques.

La spinelle chromite est avantageusement une spinelle de numéro CAS 55353-02-1.

Le pigment assombrissant est avantageusement un matériau spinelle de numéro CAS 55353-02-1 ou du carbone amorphe.

Ce matériau composite comprend donc une matrice métallique contenant de l'or et des particules de pigment assombrissant. Les particules de pigment assombrissant sont réparties de manière homogène dans la matrice métallique du matériau composite. Il ne s'agit pas d'une couche de pigment sur la surface du matériau composite. En outre, les particules de pigment assombrissant ne sont pas en solution solide dans une matrice métallique.

Les particules de pigment assombrissant utilisées, et leur pourcentage volumique spécifique, permettent d'assombrir la couleur de la matrice métallique dans la masse, ce qui n'est pas le cas des alliages de l'art antérieur. Ce matériau composite peut présenter un aspect mat ou poli. D'autre part, les particules de pigment assombrissant, grâce au volume qu'elles occupent et à leur masse volumique (inférieure à celle de la matrice métallique), permettent de disposer d'un matériau composite plus léger, à volume identique, que la matrice métallique.

Un matériau composite comprenant au moins 583 %o d'or (≥ 14 carats) en poids par rapport à son poids total, signifie que 1000 grammes de ce matériau composite contiennent au moins 583 grammes d'or.

De manière avantageuse, le matériau composite peut comprendre au moins 750 %o d'or (≥ 18 carats), en poids par rapport au poids total du matériau composite, par exemple au moins 833 %o d'or (≥ 20 carats) ou au moins 917 ‰ d'or (≥ 22 carats), ou au moins 958 %o d'or (≥ 23 carats).

La quantité de particules de pigment assombrissant représente 417 ‰ ou moins, en poids par rapport au poids total du matériau composite, par exemple 250 %o ou moins, ou 167‰ ou moins, ou 83 %o ou moins, ou 42 %o ou moins.

Selon un mode de réalisation particulier, la quantité de particules de pigment assombrissant représente 20 ‰ à 180 ‰, en poids par rapport au poids total du matériau composite.

La quantité de pigment assombrissant ne peut pas être nulle. De manière préférée, elle est toujours supérieure ou égale à 20 %o en poids. En effet, les particules de pigment assombrissant représentant 15 à 75 % du volume total du matériau composite. L'homme du métier saura ajuster la quantité de particules de pigment assombrissant de manière à atteindre 15 à 75 % volumique, notamment en fonction de la masse volumique des particules.

A titre d'exemple, 100 à 180 ‰ en poids de pigment assombrissant peuvent correspondre à 25 à 75 % du volume, et 150 à 180 %o en poids peuvent correspondre à 35 à 75 % du volume du matériau composite.

Selon un mode de réalisation particulier, le pigment assombrissant est constitué de particules de spinelle représentant 100 à 180 ‰ en poids et 25 à 45 % du volume du matériau composite, avantageusement 150 à 180 ‰ en poids et 35 à 45 % du volume.

Selon un autre mode de réalisation particulier, le pigment assombrissant est constitué de particules de carbone amorphe représentant 100 à 180 ‰ en poids et 45 à 75 % du volume du matériau composite, avantageusement 150 à 180 ‰ en poids et 65 à 75 % du volume.

De manière générale, les plages de valeurs incluent les bornes. Ainsi, la plage 15 à 75 % inclut les valeurs 15 % et 75 %.

En dessous de 15 % en volume, les particules n'apportent pas l'effet assombrissant recherché, par rapport à la couleur de la matrice métallique. Au-delà de 75 % en volume, le matériau composite ne présente pas une intégrité de matière suffisante pour les applications visées. Sans vouloir être liée à une quelconque théorie, ce phénomène au-delà de 75 % en volume peut s'expliquer par un manque de cohésion au sein du matériau composite.

Selon un mode de réalisation avantageux, le matériau composite peut comprendre de 20 à 60 %, encore plus avantageusement de 40 à 60 % de pigment assombrissant en volume par rapport au volume total du matériau composite. Dans ce cas, l'effet d'assombrissement lié à la présence des particules est plus important.

Selon un mode de réalisation avantageux, le matériau composite comprend au moins 750 ‰ d'or (en poids) et de 20 à 60 %, encore plus avantageusement de 40 à 60 % de pigment assombrissant en volume par rapport au volume total du matériau composite. Dans ce cas, l'effet d'assombrissement lié à la présence des particules est plus important.

Comme déjà indiqué, le pigment assombrissant est du carbone amorphe, un matériau spinelle ou leurs mélanges.

Le matériau composite est dépourvu d'autre types de particules (CuO...).

Le carbone amorphe ne présente pas de structure cristalline, ce qui le distingue notamment du graphite ou du diamant.

Selon un mode de réalisation avantageux, le carbone amorphe du matériau composite selon l'invention est du carbone amorphe sphérique ou tétragonal.

Selon un mode de réalisation avantageux, les particules de pigment assombrissant présentes dans le matériau composite présentent une granulométrie inférieure ou égale à 20 microns (µm, micromètres), plus préférentiellement inférieure ou égale à 10 microns. De manière générale, ces particules présentent une granulométrie avantageusement supérieure ou égale à quelques nanomètres, avantageusement au moins 20 nanomètres, plus avantageusement au moins 50 nanomètres.

Selon un autre mode de réalisation, les particules de pigment assombrissant présentes dans le matériau composite peuvent présenter un d10 inférieur à 5 microns (10 %, en nombre, de particules ont une taille inférieure à 5 microns) et/ou un d50 inférieur à 10 microns et/ou un d90 inférieur à 15 microns.

La granulométrie correspond à la taille moyenne en nombre des particules. Elle peut être déterminée par les méthodes conventionnelles, par exemple par diffraction laser. La taille des particules correspond à leur dimension la plus importante, par exemple le diamètre dans le cas de particules sphériques. La granulométrie peut aussi être exprimée par rapport à la taille moyenne en volume.

De manière avantageuse, les particules se présentent sous forme sphérique ou tétragonale ou lamellaire. La forme lamellaire peut notamment résulter du broyage de particules sphériques ou tétragonales.

Selon un mode de réalisation particulier, le matériau composite peut également comprendre au moins un premier élément métallique d'alliage, par exemple l'argent (Ag), le cuivre (Cu), le palladium (Pd) et leurs mélanges. L'homme du métier saura adapter la quantité de ce premier élément métallique d'alliage de manière à obtenir un matériau composite comprenant au moins 583 ‰ d'or, avantageusement au moins 750 %o d'or.

De manière avantageuse, ce premier élément métallique d'alliage représente entre 0 %o et 250 ‰ du poids de la matrice métallique du matériau composite, avantageusement entre 1 ‰ et 250 ‰.

Ainsi, selon un mode de réalisation préféré, le matériau composite est constitué d'une matrice métallique et de particules de pigment assombrissant (répartis homogènement dans la matrice métallique).

La matrice métallique peut présenter un des rapports en poids suivants :
- Au/Pd : 925/75,
- Au/Cu : 917/83,
- Au/Ag/Cu : 917/39/44,
- Au/Pd/Cu/Ag : 750/125/95/30,
- Au/Ag/Cu : 750/45/205,
- Au/Ag/Cu : 750/125/125.

Il est ainsi possible d'obtenir de l'or jaune assombri, de l'or rouge assombri ou de l'or gris assombri selon les éléments d'alliage utilisés.

Selon d'autres modes de réalisation, le matériau composite peut également comprendre au moins un deuxième élément métallique d'alliage, par exemple le fer, le nickel, le platine, le zinc, le titane, le cobalt, le manganèse, le zirconium, le silicium, et leurs mélanges.

De manière avantageuse, ce deuxième élément métallique d'alliage représente entre 0 %o et 50 ‰ du poids de la matrice métallique du matériau composite, avantageusement entre 1 ‰ et 50 ‰.

Le matériau composite peut aussi comprendre un affineur de grain, par exemple un affineur de grain choisi parmi le rhénium, l'iridium, le vanadium, le molybdène, l'yttrium et leurs mélanges.

Lorsqu'il est présent, l'affineur de grain peut représenter entre 0,01 ‰ (= 10 ppm) et 2 ‰ (= 2000 ppm), plus avantageusement entre 0,02 ‰ et 0,5 ‰, en poids de la matrice métallique du matériau composite.

Les premier et deuxième éléments métalliques d'alliage peuvent permettre non seulement d'améliorer les propriétés du matériau composite, par exemple les propriétés mécaniques, ou sa stabilité dans le temps, mais aussi de faciliter sa fabrication ou de modifier sa couleur, ou d'améliorer l'affinité chimique avec les particules de pigment assombrissant (cohésion entre la matrice métallique et les particules).

De manière avantageuse, le matériau composite présente un rapport en poids or/élément(s) additionnel(s) compris entre 750/250 et 958/42. Il peut notamment être égal à 833/167, ou 917/83, ou 917/83. Par élément(s) additionnel(s), on désigne un ou plusieurs éléments choisis parmi le premier élément métallique d'alliage, le deuxième élément métallique d'alliage, l'affineur de grains, et leurs mélanges.

Le matériau composite selon l'invention peut également contenir d'éventuelles impuretés qui représentent avantageusement moins de 1000 ppm (<0,1 ‰) par rapport au poids total du matériau composite. Parmi ces éventuelles impuretés, les impuretés métalliques représentent avantageusement moins de 1000 ppm du matériau composite. La quantité d'impuretés métalliques reste néanmoins avantageusement inférieure à la quantité des éventuels éléments métalliques d'alliage et de l'affineur de grain lorsque le matériau composite en contient. Les impuretés métalliques proviennent généralement de la matrice métallique. Les impuretés non-métalliques peuvent notamment être du carbone, de l'oxygène ou de l'azote par exemple.

De manière avantageuse, le matériau composite est constitué de :
- une matrice métallique contenant de l'or, optionnellement au moins un premier élément métallique d'alliage, optionnellement au moins un deuxième élément métallique d'alliage, optionnellement au moins un affineur de grain, l'or représentant au moins 583 ‰, par exemple au moins 750 ‰, ou au moins 833 ‰, ou au moins 917 ‰, ou au moins 958 ‰ du poids du matériau composite,
   le premier élément métallique d'alliage étant avantageusement choisi parmi l'argent, le cuivre, le palladium, et leurs mélanges
   le deuxième élément métallique d'alliage étant avantageusement choisi parmi le fer, le nickel, le platine, le zinc, le titane, le cobalt, le manganèse, le zirconium, le silicium leurs mélanges, l'affineur de grain étant avantageusement choisi parmi le rhénium, l'iridium, le vanadium, le molybdène, l'yttrium et leurs mélanges,
   le matériau composite présentant avantageusement un rapport en poids or/élément(s) additionnel(s) compris entre 750/250 et 958/42, l'élément(s) additionnel(s) désignant un ou plusieurs éléments choisis parmi le premier élément métallique d'alliage, le deuxième élément métallique d'alliage, l'affineur de grains, et leurs mélanges,
- 417 ‰ ou moins, en poids par rapport au poids total du matériau composite, de particules de pigment assombrissant, par exemple 250 ‰ ou moins, ou 167 ‰ ou moins, ou 83 ‰ ou moins, ou 42 ‰ ou moins,
   les particules de pigment assombrissant représentant 15 à 75 % en volume par rapport au volume total du matériau composite,
- d'éventuelles impuretés.

Comme déjà indiqué, le matériau composite selon l'invention présente avantageusement une coloration sombre.

Cet effet d'assombrissement est dû à la présence des particules de pigment assombrissant, réparties de manière homogène dans la matrice métallique du matériau composite.

La présence de ces particules, qui jouent le rôle d'assombrissant (noirs ou gris foncés), en quantité et volume adaptés permet d'obtenir par effet composite un assombrissement homogène dans la masse du matériau composite. Il ne s'agit pas d'une simple couche superficielle, comme dans certaines réalisations de l'art antérieur, mais d'une coloration homogène dans tout le matériau composite.

En outre, en fonction du traitement de surface appliqué, le matériau composite peut présenter un aspect mat ou poli.

De manière générale, la couleur d'un matériau peut être définie par ses coordonnées CIE L^{∗}a^{∗}b^{∗}, la CIE étant la Commission internationale de l'éclairage :
- la composante L^{∗} correspond à la brillance, elle est comprise entre 0 (noir) et 100 (blanc),
- la composante a^{∗} représente une gamme de 256 niveaux (8 bits), notés par une valeur entière, entre le rouge (+127), le gris (0) et le vert (-128),
- la composante b^{∗} représente une gamme de 256 niveaux (8 bits), notés par une valeur entière, entre le jaune (+127), le gris (0) et le bleu (-128).

Les coordonnées CIE L^{∗}a^{∗}b^{∗} peuvent notamment être obtenues au moyen d'un spectrophotomètre conventionnel, par mesure des propriétés de réflectance en fonction de la longueur d'onde d'illumination.

Les coordonnées CIE L^{∗}a^{∗}b^{∗} d'un matériau peuvent être facilement mesurées à l'aide d'un spectrophotomètre laser en suivant la norme NF EN ISO 8654 et ce, conformément à la pratique de l'homme du métier.

Un matériau dont les composantes a^{∗} et b^{∗} sont proches de 0 et dont la composante L^{∗} est proche de 100 est un matériau blanc et brillant. Plus la valeur L^{∗} diminue et plus la teinte du matériau s'assombrit et plus sa brillance diminue pour prendre un aspect mat.

Avantageusement, la présence des particules de pigment assombrissant dans les proportions spécifiques de l'invention permet d'obtenir un matériau composite dont la valeur L^{∗} est diminuée d'au moins 10, et préférentiellement d'au moins 15, par rapport à celle d'un matériau composite de même composition à l'exception des particules de pigment assombrissant.

Le matériau composite selon l'invention (avec pigment assombrissant) présente une teinte proche de celle d'un alliage de même composition mais sans pigment assombrissant.

En raison de ses propriétés (outre sa dureté), comme sa couleur sombre et son aspect mat ou poli, le matériau composite selon l'invention peut être utilisé dans de nombreux domaines et, plus particulièrement, dans l'industrie du luxe.

Aussi, la présente invention concerne également un article comprenant ce matériau composite ou étant constitué de celui-ci. Il peut notamment s'agir d'un article d'horlogerie, d'un article de joaillerie, d'un article de maroquinerie ou d'un article d'écriture.

Par article d'horlogerie, on désigne notamment les boitiers de montre, les couronnes, les poussoirs, les cadrans, les bracelets métalliques de montres, les fermoirs, les pièces mécaniques d'un mouvement horloger (masse oscillante, balancier, platine, pont...)...

Par article de joaillerie, on désigne les articles de bijouterie (colliers, pendentifs, chaines, bagues, boucles d'oreilles, bracelets, broches, diadèmes et autres bijoux), mais également les ornements, par exemple les accessoires de mode (boutons de manchette, pinces à billet, pinces à cheveux...).

Par article de maroquinerie, on désigne notamment les objets métalliques tels que les boucles de ceinture, les fermoirs de sac à main...

Par article d'écriture, on désigne notamment les stylos, les coupe papiers...

La présente invention concerne également un procédé de fabrication du matériau composite, par exemple par métallurgie des poudres.

Le procédé de fabrication du matériau composite selon l'invention comprend au moins les étapes suivantes :
a) fourniture d'une matrice métallique pulvérulente contenant de l'or ;
b) fourniture de particules de pigment assombrissant,
   le pigment assombrissant étant du carbone amorphe, un matériau spinelle ou leurs mélanges, le matériau spinelle étant choisi dans le groupe constitué des spinelles suivantes : chromite, cochromite, cuprospinel, dellagiustaite, franklinite, gahnite, galaxite, hausmannite, et leurs mélanges ;
c) mélange de la matrice métallique pulvérulente avec les particules de pigment assombrissant ;
d) consolidation du mélange obtenu à l'étape c) pour obtenir un matériau composite ;
le mélange de la matrice métallique pulvérulente et des particules de pigment assombrissant ayant des proportions choisies de manière à ce que le matériau composite obtenu à l'étape d) contienne :
- au moins 583 ‰, et de préférence au moins 750 %o d'or, en poids par rapport au poids total du matériau composite ; et
- 417 ‰ ou moins, en poids par rapport au poids total du matériau composite, de particules de pigment assombrissant représentant 15 à 75 %, de préférence 20 à 60 % et encore plus préférentiellement de 40 à 60 %, par exemple environ 50 %, en volume de particules par rapport au volume total du matériau composite.

De manière générale, le rapport en poids entre les éléments constituant la matrice métallique pulvérulente (or, éventuels éléments d'alliages et/ou affineur de grains...) et les particules de pigment assombrissant reste le même entre les étapes c) et d).

Selon un mode de réalisation avantageux du procédé, la matrice métallique pulvérulente fournie à l'étape a) présente une granulométrie supérieure à 0,1 µm et inférieure ou égale à 200 microns, plus avantageusement inférieure ou égale à 100 microns, préférentiellement inférieure ou égale à 50 microns, encore plus préférentiellement inférieure ou égale à 20 µm, voire inférieure ou égale 10 µm.

La granulométrie de la matrice métallique pulvérulente fournie à l'étape a) est avantageusement comprise entre 0,1 µm et 200 µm. Elle correspond avantageusement à une classe de [15-50] microns, c'est-à-dire des particules ayant un d10 de 15 µm et un d90 de 50 µm.

La composition (ratio des éléments métalliques) de la matrice métallique pulvérulente fournie à l'étape a) est identique à celle que l'on retrouve dans le matériau composite, comme décrit ci-dessus.

Selon un mode de réalisation avantageux du procédé, les particules de pigment assombrissant de l'étape b) présentent une granulométrie inférieure ou égale à 20 microns, et préférentiellement inférieure ou égale à 10 microns. De manière avantageuse, ces particules présentent une granulométrie supérieure ou égale à quelques nanomètres.

Le mélange de l'étape c) peut être réalisé par différentes méthodes, qui peuvent influencer les propriétés du matériau composite obtenu à la fin, notamment ses propriétés mécaniques, son apparence (couleur, aspect, éclat) ou la facilité à effectuer des traitements de finition (« post-traitements ») sur celui-ci.

Selon un mode de réalisation du procédé, le mélange de l'étape c) est un mélange simple, réalisé manuellement pour les petites quantités, ou à l'aide d'un mélangeur automatisé, par exemple un mélangeur dynamique tridimensionnel tels que ceux commercialisés sous la marque TURBULA^{™} par exemple.

Selon un autre mode de réalisation du procédé, le mélange de l'étape c) est un mélange énergétique, réalisé par exemple dans un broyeur planétaire ou effectué par co-broyage à billes ou à boulets (technique couramment appelée « ball miling » par l'homme du métier), préférentiellement en présence de billes de zircone ou d'acier. Plusieurs protocoles peuvent être appliqués avec cet équipement :
- broyage des particules de pigment assombrissant puis adjonction de la matrice métallique pulvérulente, et/ou
- co-broyage des particules de pigment assombrissant avec la matrice métallique pulvérulente.

Dans le cas du broyage, les particules de pigment assombrissant sont disposées dans le broyeur ayant pour but une fragmentation de ces dernières en sous-espèces de granulométrie inférieure. Des dimensionnels submicroniques peuvent alors être obtenues.

Le co-broyage a un double effet : (i) fragmenter les particules (pigment assombrissant) et ainsi diminuer leur granulométrie initiale et (ii) mélanger de façon plus intime les particules de pigment assombrissant et la poudre (matrice métallique pulvérulente), en provoquant une décoration de la poudre par recouvrement ou incorporation. Le facteur de forme de la poudre (ductile) peut être altéré en passant par exemple d'une structure sphérique a une structure plus lamellaire (écrasée). La finalité de cette opération est amenée par le choix des paramètres qui peuvent être résumés à la taille des billes utilisées ainsi que leur nombre, leur nature, le temps et la fréquence de sollicitation.

Selon un autre mode de réalisation du procédé, le mélange de l'étape c) peut-être réalisé par fonctionnalisation de surface, c'est-à-dire par un enrobage de l'un des deux constituants du mélange par le second.

Le mélange est préférentiellement réalisé sans ajout de liant, en milieu sec ou liquide, le milieu liquide étant préférentiellement aqueux (par exemple dans de l'éthanol ou autre...), notamment lorsqu'il est réalisé par co-broyage à billes. Le cas échéant, le liant sera éliminé lors de l'étape d) de consolidation ou lors d'une étape de déliantage préalable à l'étape d) de consolidation.

Selon un mode de réalisation particulier du procédé, la consolidation de l'étape d) est réalisée par pressage (avantageusement à une contrainte appliquée supérieure à 60 MPa, par exemple entre 65 et 75 MPa, de préférence entre 500 et 950°C, par exemple entre 750 et 850°C) ou par fabrication additive.

Selon un mode de réalisation du procédé, la consolidation de l'étape d) est réalisée par frittage, de préférence par frittage flash (également appelé « spark plasma sintering » ou SPS), ou par pressage à chaud (avantageusement à une contrainte appliquée supérieure à 60 MPa, par exemple entre 65 et 75 MPa, de préférence entre 500 et 950°C, par exemple entre 750 et 850°C).

Lorsque la consolidation de l'étape d) se fait par frittage flash (SPS), la température de frittage est préférentiellement comprise entre 500 et 950°C, par exemple entre 750 et 850°C. Le frittage est effectué avantageusement avec des cycles inférieurs à 30 minutes.

Après la consolidation de l'étape d), on obtient un matériau composite dans lequel les particules de pigment assombrissant forment un ensemble de particules discrètes régulièrement réparties ou une phase continue interconnectée dans toute la masse du matériau composite. L'effet d'assombrissement résultant est donc homogène et obtenu dans toute la masse du matériau composite.

Le fait de mélanger un volume important de particules de pigment assombrissant à la matrice métallique initiale permet d'obtenir, après consolidation, une diminution de la masse volumique du matériau composite résultant, ce qui peut être bénéfique dans une démarche d'allégement de la matière.

Sans sortir des plages revendiquées, l'homme du métier pourra facilement adapter les proportions relatives de matrice métallique pulvérulente et de particules, ainsi que la teneur en or de la matrice métallique pulvérulente en fonction de la pureté du matériau composite (caratage) et du degré d'assombrissement/matifiant qu'il souhaite obtenir.

Ainsi par exemple, pour obtenir un matériau composite final ayant un titrage de 14 carats (583 ‰ d'or en poids par rapport au poids total du matériau composite), l'homme du métier devra choisir une matrice métallique pulvérulente de titrage supérieur à 14 carats (contenant plus de 583 g d'or pour 1000 g de matrice).

L'homme du métier choisira par exemple une matrice métallique pulvérulente ayant un titrage supérieur ou égal à 18 carats (contenant au moins 750 g d'or pour 1000 g de matrice), ou même une matrice métallique pulvérulente ayant un titrage supérieur ou égal à 20 carats (contenant au moins 833 g d'or pour 1000 g de matrice).

De même, pour obtenir un matériau composite final ayant un titrage de 18 carats (750 ‰ d'or en poids par rapport au poids total du matériau composite), l'homme du métier devra choisir une matrice métallique pulvérulente de titrage supérieur à 18 carats (contenant plus de 750 g d'or pour 1000 g de matrice).

L'homme du métier choisira par exemple une matrice métallique pulvérulente ayant un titrage supérieur ou égal à 20 carats (contenant au moins 833 g d'or pour 1000 g de matrice), ou même supérieur ou égal à 22 carats (contenant au moins 917 g d'or pour 1000 g de matrice).

L'invention et les avantages qui en découlent ressortiront mieux des exemples suivants donnés afin d'illustrer l'invention et non de manière limitative.

### EXEMPLES DE REALISATION DE L'INVENTION

### Exemple 1 (invention) :

Un premier matériau composite d'or gris sombre a été préparé selon les étapes suivantes :
a) On a utilisé une matrice métallique pulvérulente constituée d'une poudre d'or gris à 18 carats de formule Au750Pd125Cu95Ag30, c'est-à-dire contenant 75 % d'or, 12,5 % de palladium, 9,5 % de cuivre et 3 % d'argent (pourcentages par rapport au poids total de la matrice). La granulométrie de la poudre d'or gris correspondait à une classe de [15-50] microns (d10 = 15 µm, d90 = 50 µm).
b) On a utilisé des particules de carbone amorphe sphérique de granulométrie correspondant à une classe de [10-20] microns.
c) la poudre d'or gris et les particules de carbone amorphe sphérique ont été mélangées.
   Les particules de carbone amorphe sphérique représentent 12 % en poids du mélange (60 % environ en volume).
   Le mélange a été réalisé par co-broyage avec des billes de zircone de 10 mm de diamètre (« ball-milling »), en milieu sec et sans ajout de liant.
d) Le mélange a été consolidé par frittage flash (SPS) à 800°C avec un cycle de frittage ayant duré 23 minutes, hors temps de refroidissement.

On a ainsi obtenu un matériau composite d'or gris sombre, contenant 662 ‰ d'or en poids par rapport au poids total du matériau composite et environ 60 % en volume de carbone amorphe (120 ‰ en poids) par rapport au volume total du matériau composite.

### Exemple 2 :

Un deuxième matériau composite d'or gris sombre a été préparé selon le protocole de l'exemple 1, mais en remplaçant les particules de carbone amorphe par des particules de spinelles de numéro CAS 55353-02-1 de granulométrie inférieure à 10 microns représentant 24 % en poids du mélange de l'étape c).

On a ainsi obtenu un matériau composite d'or gris sombre, contenant 572 ‰ d'or en poids par rapport au poids total du matériau composite et 50 % en volume de spinelles (240 ‰ en poids) par rapport au volume total du matériau composite.

Cet exemple illustre l'effet assombrissant lié à la présence de particules de pigment assombrissant quand bien même le matériau composite comprend moins d'or (572 ‰) que le matériau composite selon l'invention (≥ 583 ‰).

### Exemple 3 :

Un matériau composite d'or rouge sombre a été préparé selon le protocole de l'exemple 2, mais avec de la poudre d'or rouge à 18 carats de formule Au750Ag45Cu205 (en poids). En outre, le mélange a été réalisé manuellement, en phase liquide (20 % en poids d'éthanol pour 80 % en poids de poudre d'or rouge + carbone amorphe).

On a ainsi obtenu un matériau composite d'or rouge sombre, contenant 658 %o d'or en poids par rapport au poids total du matériau composite et environ 62 % en volume de carbone amorphe sphérique (127 ‰ en poids) par rapport au volume total du matériau composite.

### Coordonnées CIE L^{∗}a^{∗}b^{∗} :

Afin de quantifier l'effet d'assombrissement procuré par l'invention, les coordonnées L^{∗}, a^{∗} et b^{∗} de l'espace CIE L^{∗}a^{∗}b^{∗} des deux matériaux d'or gris sombre des exemples 1 et 2 ont été mesurées au moyen d'un spectrophotomètre laser et comparées à celles d'un alliage d'or standard (Au750Pd125Cu95Ag30, en poids, pour l'or gris ; Au750Ag45Cu205, en poids, pour l'or rouge), obtenu dans les mêmes conditions expérimentales, mais uniquement à partir de la matrice métallique pulvérulente initiale (sans ajout de particules de pigment assombrissant).

La variation du paramètre L^{∗} des exemples de matériaux composites selon l'invention a également été calculée par rapport à celui de l'alliage standard d'or (gris ou rouge) servant de référence.

Les résultats obtenus ont été regroupés dans le tableau 1 ci-après.

**Tableau 1 : coordonnées CIE L^{∗}a^{∗}b^{∗}**

| **Matériaux testés** | **L*** | **a*** | **b*** | **ΔL*** |
|---|---|---|---|---|
| Alliage d'or gris (Au750Pd125Cu95Ag30) | 80,9 | 2,1 | 7,5 | 0 |
| Exemple 1 (Au750Pd125Cu95Ag30 + carbone amorphe) | 63,8 | 2,0 | 6,7 | **17,1** |
| Exemple 2 (Au750Pd125Cu95Ag30 + spinelles) | 60,1 | 1,5 | 2,9 | **21,3** |
| Alliage d'or rouge Au750Ag45Cu205 | 87.1 | 8.6 | 18.3 | 0 |
| Exemple 3 (Au750Ag45Cu205 + carbone amorphe) | 68.5 | 6.5 | 13.3 | **19,4** |

Pour chacun des matériaux composites des Exemples 1 à 3, on constate une diminution de la valeur du paramètre L^{∗} supérieure à 15 par rapport à celle de l'alliage de référence, et même supérieure à 20 pour l'Exemple 2. Cette diminution traduit un assombrissement important de ces matériaux composites par rapport à l'alliage de référence, assombrissement obtenu grâce à l'invention.

## Revendications

1. Matériau composite comprenant :
- au moins 583 ‰ d'or, en poids par rapport au poids total du matériau composite ;
- 417 ‰ ou moins, en poids par rapport au poids total du matériau composite, de particules de pigment assombrissant,
ces particules de pigment assombrissant représentant 15 à 75 % en volume par rapport au volume total du matériau composite,
le pigment assombrissant étant du carbone amorphe, un matériau spinelle ou leurs mélanges, le matériau spinelle étant choisi dans le groupe constitué des spinelles suivantes : chromite, cochromite, cuprospinel, dellagiustaite, franklinite, gahnite, galaxite, hausmannite, et leurs mélanges.

2. Matériau composite selon la revendication précédente, ***caractérisé* en ce que** les particules de pigment assombrissant représentent 40 à 60 %, en volume par rapport au volume total du matériau composite.

3. Matériau composite selon l'une quelconque des revendications précédentes, ***caractérisé* en ce que** les particules de pigment assombrissant présentent une granulométrie inférieure ou égale à 20 microns, préférentiellement inférieure ou égale à 10 microns.

4. Matériau composite selon l'une quelconque des revendications précédentes, ***caractérisé* en ce que** le pigment assombrissant est du carbone amorphe.

5. Matériau composite selon l'une des revendications 1 à 3, ***caractérisé* en ce que** le pigment assombrissant est un matériau spinelle de numéro CAS 55353-02-1.

6. Matériau composite selon l'une quelconque des revendications précédentes, ***caractérisé* en ce que** le matériau composite comprend de l'or et au moins un premier élément métallique d'alliage choisi parmi le palladium, le cuivre, l'argent et leurs mélanges,
et **en ce que** le matériau composite comprend au moins 750 ‰ d'or, en poids par rapport au poids total du matériau composite.

7. Procédé de fabrication d'un matériau composite selon l'une quelconque des revendications précédentes, comprenant au moins les étapes suivantes :
a) fourniture d'une matrice métallique pulvérulente contenant de l'or ;
b) fourniture de particules de pigment assombrissant ;
c) mélange de la matrice métallique pulvérulente avec les particules de pigment assombrissant ;
d) consolidation du mélange obtenu à l'étape c) pour obtenir un matériau composite ;
le mélange de la matrice métallique pulvérulente et des particules de pigment assombrissant ayant des proportions choisies de manière à ce que le matériau composite obtenu à l'étape d) contienne :
- au moins 583 ‰ d'or, et de préférence au moins 750 ‰, en poids par rapport au poids total du matériau composite ; et
- 417 ‰ ou moins, en poids par rapport au poids total du matériau composite, de particules de pigment assombrissant,
ces particules de pigment assombrissant représentant 15 à 75 % en volume par rapport au volume total du matériau composite,
le pigment assombrissant étant du carbone amorphe, un matériau spinelle ou leurs mélanges, le matériau spinelle étant choisi dans le groupe constitué des spinelles suivantes : chromite, cochromite, cuprospinel, dellagiustaite, franklinite, gahnite, galaxite, hausmannite, et leurs mélanges.

8. Procédé de fabrication d'un matériau composite selon la revendication 7, ***caractérisé* en ce que** la matrice métallique pulvérulente fournie à l'étape a) présente une granulométrie inférieure ou égale à 100 microns, préférentiellement inférieure ou égale à 50 microns.

9. Procédé de fabrication d'un matériau composite selon la revendication 7 ou 8, ***caractérisé* en ce que** les particules de pigment assombrissant fournies à l'étape b) présentent une granulométrie inférieure ou égale à 20 microns, et préférentiellement inférieure ou égale à 10 microns.

10. Procédé de fabrication d'un matériau composite selon l'une quelconque des revendications 7 à 9, ***caractérisé* en ce que** le mélange de l'étape c) est un mélange simple réalisé manuellement ou à l'aide d'un mélangeur automatisé, ou un mélange énergétique réalisé dans un broyeur planétaire ou par co-broyage à billes ou à boulets, ou encore un enrobage de l'un des deux constituants du mélange par le second.

11. Procédé de fabrication d'un matériau composite selon l'une quelconque des revendications 7 à 9, ***caractérisé* en ce que** le mélange de l'étape c) est réalisé par co-broyage à billes sans ajout de liant, en milieu sec ou liquide.

12. Procédé de fabrication d'un matériau composite selon l'une quelconque des revendications 7 à 11, ***caractérisé* en ce que** la consolidation de l'étape d) est réalisée par pressage ou par fabrication additive.

13. Procédé de fabrication d'un matériau composite selon l'une quelconque des revendications 7 à 11, ***caractérisé* en ce que** la consolidation de l'étape d) est réalisée par frittage, de préférence par frittage flash (SPS), ou par pressage à chaud.

14. Procédé de fabrication d'un matériau composite selon l'une quelconque des revendications 7 à 11, ***caractérisé* en ce que** la consolidation de l'étape d) est réalisée par frittage flash (SPS), avec une température de frittage comprise entre 500 et 950°C.

15. Article d'horlogerie, de joaillerie, de maroquinerie ou d'écriture comprenant du matériau composite selon l'une des revendications 1 à 6.
